(19) Europäisches Patentamt
European Patent Office
Office européen des brevets

(11) EP 0 648 359 B1

(12) EUROPEAN PATENT SPECIFICATION

(45) Date of publication and mention
of the grant of the patent:
**17.04.1996 Bulletin 1996/16**

(51) Int Cl.⁶: **G06T 7/20**, G06F 17/17

(86) International application number:
**PCT/GB93/01405**

(21) Application number: 93914882.1

(22) Date of filing: **05.07.1993**

(87) International publication number:
**WO 94/01830 (20.01.1994 Gazette 1994/03)**

(54) **CORRELATION SIGNAL PROCESSING**

KORELATIONSSIGNALVERARBEITUNG.

TRAITEMENT DE SIGNAUX DE CORRELATION

(84) Designated Contracting States:
**AT BE CH DE DK ES FR GB IE IT LI NL PT SE**

(30) Priority: **03.07.1992 GB 9214213**

(43) Date of publication of application:
**19.04.1995 Bulletin 1995/16**

(73) Proprietor: **SNELL & WILCOX LIMITED**
**Twickenham, Middlesex TW1 1RQ (GB)**

(72) Inventor: **BORER, Timothy John**
**Reigate, Surrey RH2 8HX (GB)**

(74) Representative: **Garratt, Peter Douglas et al**
**Mathys & Squire**
**100 Grays Inn Road**
**London WC1X 8AL (GB)**

(56) References cited:
**EP-A- 0 480 807**          **JP-A- 4 115 376**

## Description

This invention relates to correlation signal processing and in the most important example to the processing of correlation surfaces which are utilised in estimating the motion within sequences of video pictures.

By measuring the apparent movement in sequences of video images, it is possible to improve the processing which can be applied to such sequences. A particularly good method of motion estimation is disclosed in GB 2 188 510; this method can be referred to as phase correlation. Briefly, a correlation surface is derived by phase correlating two pictures selectively displaced in the x and y direction. Maxima in the correlation surface can be seen to relate to displacements of objects from one video picture to the next. Once these motion vectors have been identified, it is possible in further processing to assign to each pixel, the appropriate motion vector.

It can be shown that a critical factor in motion estimation and in the further processing which relies upon the motion vectors, is the accuracy to which peaks in the correlation surface can be identified. A correlation surface will be sampled and appropriate steps taken to identify a sample point which is "higher" than its immediate neighbours". Locating the peak to an accuracy of one sample interval is not sufficient, however, and further processing is required to locate the peak to sub-sample intervals.

GB 2 188 510 suggests an approach by which correlation peaks can be identified in an x,y correlation surface (in the region of an assumed maximum) by fitting to the surface a quadratic function of x and a quadratic function of y. Maxima in the x and y functions can then be determined algebraically. The point having the coordinates $x_{max}$ and $y_{max}$ is assumed to be a peak in the surface.

It is found in practice that this approach can give rise to significant errors. This is believed to happen because peaks in "real" correlation surfaces are frequently not both horizontally and vertically symmetric so that the assumptions behind the separable quadratic approach, breakdown. To give a practical example, if an object is moving diagonally in a video field, camera integration may blur the object in the direction of motion while leaving resolution, normal to the motion vector, unaffected. This, in turn, can give rise to a correlation peak which is stretched in the direction of motion. Edge like features in images can also give rise to elongated correlation peaks.

It is an object of this invention to provide an improved method of locating a maximum in a sampled correlation surface.

Accordingly, the present invention consists, in one aspect, in a method of locating, to sub-sample interval accuracy, a stationary value in a sampled correlation surface S(x,y), comprising the steps of locating a sample point x,y adjacent a stationary value, and characterised by the steps of: developing about x,y a quadratic function Z(x,y) where: $Z(x,y) = ax^2 + by^2 + cxy + dx + ey + f$; determining the linear coefficients of Z(x,y) which represent a minimised error between S(x,y) and Z(x,y); and calculating x and y coordinates of the stationary value from said linear coefficients.

In a further aspect, the present invention consists in apparatus for locating, to sub-sample interval accuracy, a stationary value in a sampled correlation surface S(x,y); comprising means for generating a raster scanned sample signal from the correlation surface; a parallel array of spatial filters (100-105) each receiving said sample signal and arithmetic means (120) receiving the outputs of said filters and deriving coordinates of an assumed stationary value to sub-sample interval accuracy from the linear coefficients of $Z(x,y) = ax^2 + by^2 + cxy + dx + ey + f$ which represent a minimised error between S(x,y) and Z(x,y).

The invention will now be described by way of example with reference to the accompanying drawings in which:-

Figure 1 is a block diagram of peak hunting apparatus according to the present invention;

Figure 2 is a block diagram of modified peak hunting apparatus according to the present invention; and

Figure 3 is a block diagram illustrating a form of correlation particularly suited for use with the present invention.

In accordance with this invention, a two dimensional quadratic function is fitted to a sampled correlation function. The two dimensional quadratic function is selected because it is the most general multi-dimensional polynomial having a single unique maximum. The quadratic surface corresponding to a particular sample point in the correlation surface is determined by a least mean squares fit to that sample point and the eight immediate neighbours. The correlation function S(x,y) is approximated by two dimensional quadratic function Z(x,y) defined as

$$Z(x,y) = ax^2 + by^2 + cxy + dx + ey + f \tag{1}$$

The error between this approximation and the true correlation surface is given by:-

$$error = \sum_{x=-1}^{1} \sum_{y=-1}^{1} (s(x,y) - z(x,y))^2 \tag{2}$$

This can be written in matrix form i.e.

$$error = e.e^T \; ; \; e = s\text{-}z \; \& \; z = M.c \tag{3}$$

Where:-

$$\mathbf{s} = \begin{bmatrix} s(-1,-1) \\ s(\ 0,-1) \\ s(\ 1,-1) \\ s(-1,\ 0) \\ s(\ 0,\ 0) \\ s(\ 1,\ 0) \\ s(-1,\ 1) \\ s(\ 0,\ 1) \\ s(\ 1,\ 1) \end{bmatrix}, \quad \mathbf{M} = \begin{bmatrix} 1 & 1 & 1 & -1 & -1 & 1 \\ 0 & 1 & 0 & 0 & -1 & 1 \\ 1 & 1 & -1 & 1 & -1 & 1 \\ 1 & 0 & 0 & -1 & 0 & 1 \\ 0 & 0 & 0 & 0 & 0 & 1 \\ 1 & 0 & 0 & 1 & 0 & 1 \\ 1 & 1 & -1 & -1 & 1 & 1 \\ 0 & 0 & 0 & 0 & 1 & 1 \\ 1 & 1 & 1 & 1 & 1 & 1 \end{bmatrix}, \quad \mathbf{c} = \begin{bmatrix} a \\ b \\ c \\ d \\ e \\ f \end{bmatrix} \tag{4}$$

It can be shown that the error is minimised, with respect to the coefficient vector C by solving the equations

$$c = (M^T M)^{-1} M^T s \tag{5}$$

It should be noted that nine sample points of a correlation surface are used to derive only six coefficients. This means that the simultaneous equations cannot be solved in a straightforward algebraic manner. However, by performing a least mean squares fit in the described manner, the noise sensitivity of the peak hunting procedure is significantly reduced.

Once the vector C has been determined, the coordinates $x_{max}$ and $y_{max}$ given by

$$x_{max} = \frac{ce - 2bd}{4ab - c^2} \; \& \; y_{max} = \frac{ed - 2ae}{4ab - c^2} \tag{6}$$

Investigations have been conducted to compare the accuracy of peak location in the present invention and the prior art approaches in GB 2 188 510 and elsewhere. Apart from the seoarable quadratic approach suggested in GB 2 188 510, other functions that have been suggested are separate x and y inverted "V" functions, sin(x)/x and sin(y)/y functions and a "centre of gravity" approach. For the purposes of this analysis, two shapes of correlation peak were postulated. Peak 1 is a circularly symmetric peak, about four samples wide, defined by

$$Peak_1(x,y) = \exp(-0.6(x_2 + y_2)) \tag{7}$$

Note that the coordinates used are relative to the centre of the peak and the units are sample intervals. $Peak_2$ is four times wider in one direction than at right angles and is orientated at 45°. It is defined by

$$Peak_2(x,y) = \exp\{-0.6(0.53x^2 - 0.94xy + 0.53y^2)\} \tag{8}$$

Both peaks were centered equally distant between four sampling sites. Measurements of the peak location were made by fitting each of the above described functions and then using a method according to the present invention. The results are set out below, in which the method according to this invention is referred to as "non-separable polynomial".

| Peak Location | Peak 1 | Peak 2 |
|---|---|---|
| Technique | Measurement Error (samples) | Measurement Error (samples) |
| Separable Quadratic | 0.0000 | 0.4500 |
| Separable Inverted 'V' | 0.0000 | 0.4091 |
| Separable sin(x)/x | 0.0000 | 0.3914 |
| Centre of Gravity | 0.1957 | 0.4696 |
| Non-separable polynomial | 0.0942 | 0.0998 |

The errors given are for one coordinate only and the magnitude error is root 2 times greater. It can be seen from inspection that all techniques work reasonably well with a circularly symmetric peak. Indeed, the fitting of seoarable functions provides an identically correct result. There is a non-zero error in the method according to this invention but it is of low order. In $peak_2$, however, there is in each of the four prior art approaches a sample error which is of the order of one half a sample interval. An error of this order is likely to lead to a perceptible degradation in a subsequently processed video image. By contrast, the method according to the present invention provides an error of approximately one tenth of a sample interval.

It has been recognised by the present inventor that a solution of the eauation (5) can be provided using very simple hardware.

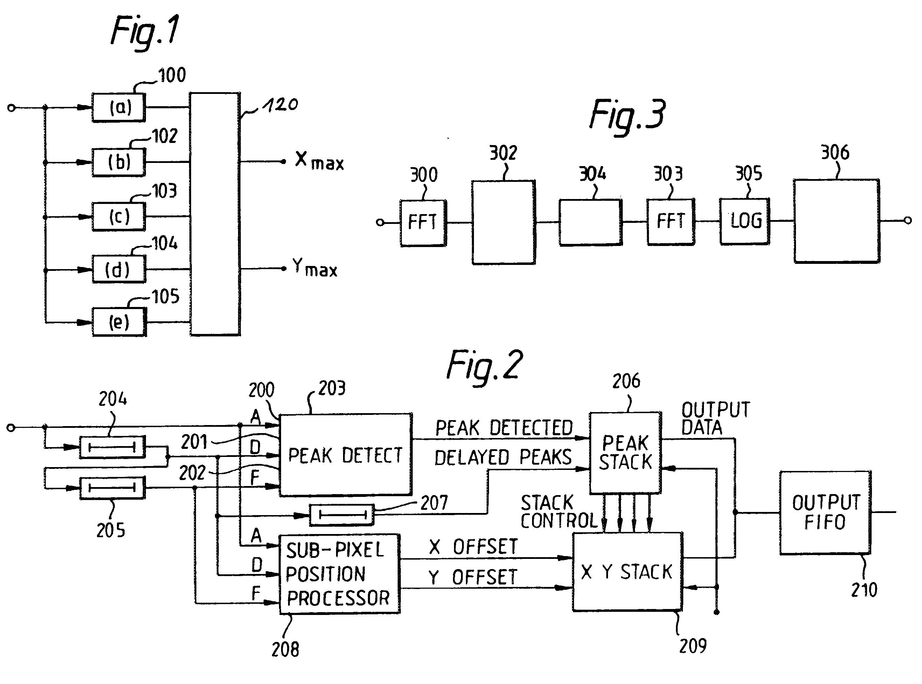

Looking again at equation (5) it can be seen that the vector C is calculated by multiplying the sample vector S by a constant six row, nine column matrix. With a raster scanned correlation surface, this calculation can be conducted using a parallel array of filters, one each for the coefficients of the quadratic function. This filter arrangement is shown in Figure 1. It will be seen that the raster scan correlation surface is applied in parallel to five filters 100 to 105 corresponding to the coefficients a,b,c,d, and e. Since the constant f does not appear in the relationships for $x_{max}$ and $y_{max}$, it is not necessary to provide a sixth filter corresponding to the coefficient f. Each of these filters is a 3 x 3 spatial filter, and it will be recognised that appropriate delays are set up to enable three adjacent scan lines to be processed. The filter apertures are as follows:-

$$\begin{vmatrix} \frac{1}{2} & -1 & \frac{1}{2} \\ \frac{1}{2} & -1 & \frac{1}{2} \\ \frac{1}{2} & -1 & \frac{1}{2} \end{vmatrix} \quad \text{(a)}$$

$$\begin{vmatrix} \frac{1}{2} & \frac{1}{2} & \frac{1}{2} \\ -1 & -1 & -1 \\ \frac{1}{2} & \frac{1}{2} & \frac{1}{2} \end{vmatrix} \quad \text{(b)}$$

$$\begin{vmatrix} -\frac{3}{4} & 0 & \frac{3}{4} \\ 0 & 0 & 0 \\ \frac{3}{4} & 0 & -\frac{3}{4} \end{vmatrix} \quad \text{(c)}$$

$$\begin{vmatrix} \frac{1}{2} & 0 & -\frac{1}{2} \\ \frac{1}{2} & 0 & -\frac{1}{2} \\ \frac{1}{2} & 0 & -\frac{1}{2} \end{vmatrix} \quad \text{(d)}$$

$$\begin{vmatrix} \frac{1}{2} & \frac{1}{2} & \frac{1}{2} \\ 0 & 0 & 0 \\ -\frac{1}{2} & -\frac{1}{2} & -\frac{1}{2} \end{vmatrix} \quad \text{(e)}$$

The filter outputs, representing the coefficients a,b,c,d, and e are taken to an arithmetic unit 120 which performs the calculation shown in equation (6) to derive outputs $x_{max}$ and $y_{max}$.

It will be recognised that the outputs $x_{max}$ and $Y_{max}$ are only meaningful in the region of a peak in the surface and some initial processing is required to locate the maximum to within an accuracy of one sample interval.

It may be convenient to combine the two steps of locating a peak and then determining the position of the peak to sub-pixel accuracy and reference is directed in this regard to Figure 2.

It is first necessary to establish the criteria for detection of a peak. The simplistic approach of looking for a sample which is "higher" than its immediate eight neighbours, is found in practice to miss a proportion of valid peaks. To describe the approach adopted in the present invention, the sample points about a processed sample point P are designated:-

$$A \; B \; C$$
$$D \; P \; E$$
$$F \; G \; H$$

These are grouped as [A B C D] and [E F G H] and a peak is detected if

*P is greater than or equal to each of [A B C D], and*

*P is greater than each of [E F G H].*

To conduct this process the scanned correlation surface is directed to a first input 200 of a peak detector 203, and through respective delays 204,205 each (of 64 pixels) to a second input 201 and a third input 202. The inputs accordingly receive the signals ABC; DPE and FGH, respectively. If a peak is detected, the amplitude is stored in a peak store 206 with the current sample being available through further delay 207.

A sub-pixel processor 208 contains the 3 × 3 filters described above and outputs the sub-pixel offsets $x_{offset}$ and $y_{offset}$ which are presented to the X/Y stack. The stack is controlled so as to hold the coarse and fine x,y coordinates of the, say, four highest peaks which are made available through a FIFO 210.

A modification to the present invention is proposed which should reduce still further the error in determining the location of a maximum. Thus it is believed that a factor leading to the residual error in the method according to this invention is that the invention seeks to fit a quadratic function to a surface which may be of higher order. To overcome or reduce the effects of this problem, it is proposed to modify the correlation function in such a way that the peaks are defined by quadratic functions. Referring to Figure 3, prior art phase correlation processing requires a forward fast Fourier transform (FFT) unit 300, frequency domain processing unit 302 and inverse FFT 303. It is proposed in a modification of the present invention to employ a Gaussian window 304 in front of the inverse FFT block 303. Since the Fourier transform of a Gaussian function is of course a Gaussian function, this achieves the result of providing a correlation surface having peaks of Gaussian form. The correlation function is then passed through a logarithmic unit 305 before passing to the peak hunting block 306, which may be exactly as described above. As a result of taking the logarithm of the Gaussian function, the correlation surface in which peaks are sought is quadratic in nature.

The Gaussian window 304 may take the form of a multiplier receiving multiplier coefficients from a ROM. The logarithmic unit 305 might comprise a look-up table.

It should be recognised that whilst this invention has been described, taking example of phase correlation surfaces, it is equally applicable to other correlation surfaces, such as crossed-correlation surfaces. The invention is of particular benefit in motion estimation but will find application in other video or indeed other signal processing techniques. Whilst it will be usual to seek maxima in a correlation surface, the invention is applicable generally to locating stationary value.

## Claims

1. A method of locating, to sub-sample interval accuracy, a stationary value in a sampled correlation surface S(x,y), comprising the step of locating a sample point x,y adjacent a stationary value, and characterised by the steps of: developing about x,y a quadratic function Z(x,y) where:

$$Z(x,y) = ax^2 + by^2 + cxy + dx + ey + f;$$

determining the linear coefficients of Z(x,y) which represent a minimised error between S(x,y) and Z(x,y); and calculating x and y coordinates of the stationary value from said linear coefficients.

2. A method according to Claim 1, wherein the linear coefficients of Z(x,y) which represent a minimised error between S(x,y) and Z(x,y) are determined in accordance with:

$$c = (M^T M)^{-1} M^T s$$

where:

$$C = \begin{bmatrix} a \\ b \\ c \\ d \\ e \\ f \end{bmatrix}, \qquad B = \begin{bmatrix} s(-1,-1) \\ s(0,-1) \\ s(1,-1) \\ s(-1,0) \\ s(0,0) \\ s(1,0) \\ s(-1,1) \\ s(0,1) \\ s(1,1) \end{bmatrix}, \qquad M = \begin{bmatrix} 1 & 1 & 1 & -1 & -1 & 1 \\ 0 & 1 & 0 & 0 & -1 & 1 \\ 1 & 1 & -1 & 1 & -1 & 1 \\ 1 & 0 & 0 & -1 & 0 & 1 \\ 0 & 0 & 0 & 0 & 0 & 1 \\ 1 & 0 & 0 & 1 & 0 & 1 \\ 1 & 1 & -1 & -1 & 1 & 1 \\ 0 & 0 & 0 & 0 & 1 & 1 \\ 1 & 1 & 1 & 1 & 1 & 1 \end{bmatrix}$$

3. A method according to Claim 1 or Claim 2, wherein the x and y coordinates of the stationary value are calculated in accordance with

$$x = \frac{ce - 2bd}{4ab - c^2} \ \& \ y = \frac{ed - 2ae}{4ab - c^2}$$

4. Apparatus for locating, to sub-sample interval accuracy, a stationary value in a sampled correlation surface S(x,y); comprising means for generating a raster scanned sample signal from the correlation surface; a parallel array of spatial filters (100-105) each receiving said sample signal and arithmetic means (120) receiving the outputs of said filters and deriving coordinates of an assumed stationary value to sub-sample interval accuracy from the linear coefficients of $Z(x,y)=ax^2+by^2+ cxy+dx+ey+f$ which represent a minimised error between S(x,y) and Z(x,y).

5. Apparatus according to Claim 4, wherein said parallel array of spatial filters comprises five filters (100-105) corresponding respectively with the linear coefficients a, b, c, d and e.

6. Apparatus according to Claim 5, wherein each said filter has an aperture of three scan lines and three samples.

7. Apparatus according to Claim 6, wherein the apertures of the respective filters are as follows:-

$$\begin{vmatrix} \frac{1}{2} & -1 & \frac{1}{2} \\ \frac{1}{2} & -1 & \frac{1}{2} \\ \frac{1}{2} & -1 & \frac{1}{2} \end{vmatrix} \ \textbf{(a)}$$

$$\begin{vmatrix} \frac{1}{2} & \frac{1}{2} & \frac{1}{2} \\ -1 & -1 & -1 \\ \frac{1}{2} & \frac{1}{2} & \frac{1}{2} \end{vmatrix} \ \textbf{(b)}$$

$$\begin{vmatrix} -\frac{3}{4} & 0 & \frac{3}{4} \\ 0 & 0 & 0 \\ \frac{3}{4} & 0 & -\frac{3}{4} \end{vmatrix} \ \textbf{(c)}$$

$$\begin{vmatrix} \dfrac{1}{2} & 0 & -\dfrac{1}{2} \\[2mm] \dfrac{1}{2} & 0 & -\dfrac{1}{2} \\[2mm] \dfrac{1}{2} & 0 & -\dfrac{1}{2} \end{vmatrix} \quad (d)$$

$$\begin{vmatrix} \dfrac{1}{2} & \dfrac{1}{2} & \dfrac{1}{2} \\[2mm] 0 & 0 & 0 \\[2mm] -\dfrac{1}{2} & -\dfrac{1}{2} & -\dfrac{1}{2} \end{vmatrix} \quad (e)$$

8. Apparatus according to any one of Claims 4 to 8, comprising peak detector means (203); a sub-pixel position processor (208) comprising said parallel array of spatial filters; scan line delay means (204, 205) providing three scan lines in parallel to said peak detector means and said sub-pixel processor; and means (206, 207, 209) for determining integral x and y values corresponding to a peak detected in said peak detector means and combining said values with x and y offset values provided by said sub-pixel position processor to provide to sub-sample interval accuracy the x and y values corresponding to a peak.

**Patentansprüche**

1. Verfahren zum Lokalisieren eines stationären Wertes in einer abgetasteten Korrelationsoberfläche $S(x,y)$ auf Unterabtastintervall-Genauigkeit, mit dem Schritt des Lokalisierens eines Abtastpunktes $x,y$ benachbart zu einem stationären Wert, und **gekennzeichnet** durch die folgenden Schritte: um $x,y$ wird eine quadratische Funktion $Z(x,y)$ entwickelt, wobei

$$Z(x,y) = ax^2 + by^2 + cxy + dx + ey + f;$$

die linearen Koeffizienten von $Z(x,y)$, die einen minimierten Fehler zwischen $S(x,y)$ und $Z(x,y)$ darstellen, werden bestimmt; und x- und y-Koordinaten des stationären Wertes werden aus den linearen Koeffizienten berechnet.

2. Verfahren nach Anspruch 1, in dem die linearen Koeffizienten von $Z(x,y)$, die einen minimierten Fehler zwischen $S(x,y)$ und $Z(x,y)$ darstellen, werden bestimmt, in Entsprechung mit:

$$c = (M^r M)^{-1} M^r s$$

wobei

$$c = \begin{bmatrix} a \\ b \\ c \\ d \\ e \\ f \end{bmatrix}, \quad s = \begin{bmatrix} s(-1,-1) \\ s(0,-1) \\ s(1,-1) \\ s(-1,0) \\ s(0,0) \\ s(1,0) \\ s(-1,1) \\ s(0,1) \\ s(1,1) \end{bmatrix}, \quad M = \begin{bmatrix} 1 & 1 & 1 & -1 & -1 & 1 \\ 0 & 1 & 0 & 0 & -1 & 1 \\ 1 & 1 & -1 & 1 & -1 & 1 \\ 1 & 0 & 0 & -1 & 0 & 1 \\ 0 & 0 & 0 & 0 & 0 & 1 \\ 1 & 0 & 0 & 1 & 0 & 1 \\ 1 & 1 & -1 & -1 & 1 & 1 \\ 0 & 0 & 0 & 0 & 1 & 1 \\ 1 & 1 & 1 & 1 & 1 & 1 \end{bmatrix}$$

3. Verfahren nach einem der Ansprüche 1 oder 2, in dem die x- und y-Koordinaten des stationären Wertes berechnet werden, in Übereinstimmung mit

$$x = \frac{ce - 2bd}{4ab - c^2} \quad \& \quad y = \frac{ed - 2ae}{4ab - c^2}$$

4. Vorrichtung zum Lokalisieren eines stationären Wertes in einer abgetasteten Korrelationsoberfläche S(x,y) bis auf eine Unterabtastintervall-Genauigkeit; mit Mitteln zum Erzeugen eines rastergescannten Abtastsignals von der Korrelationsoberfläche; mit einer parallelen Anordnung räumlicher Filter bzw. Ortsfrequenzfilter (100-105), die jeweils das Abtastsignal empfangen, und mit einer arithmetischen Einrichtung (120), die die Ausgänge der Filter empfängt und Koordinaten von einem angenommenen stationären Wert bis auf Unterabtastintervall-Genauigkeit aus den linearen Koeffizienten von $Z(x,y) = ax^2 + by^2 + cxy + dx + ey + f$ erhält, die einen minimierten Fehler zwischen S (x,y) und Z(x,y) darstellen.

5. Vorrichtung gemäß Anspruch 4, in der die parallele Anordnung von Ortsfrequenzfiltern bzw. Raumfiltern fünf Filter (100-105) entsprechend jeweils den linearen Koeffizienten a, b, c, d und e aufweist.

6. Vorrichtung nach Anspruch 5, in der jeder der Filter eine Öffnung von drei Abtast- bzw, Scanzeilen oder -linien und drei Abtastungen bzw. Probenahmen aufweist.

7. Vorrichtung nach Anspruch 6, in der die Öffnungen der jeweiligen Filter wie folgt lauten:

$$\cdot \begin{vmatrix} \frac{1}{2} & -1 & \frac{1}{2} \\ \frac{1}{2} & -1 & \frac{1}{2} \\ \frac{1}{2} & -1 & \frac{1}{2} \end{vmatrix} \quad (a)$$

$$\begin{vmatrix} \frac{1}{2} & \frac{1}{2} & \frac{1}{2} \\ -1 & -1 & -1 \\ \frac{1}{2} & \frac{1}{2} & \frac{1}{2} \end{vmatrix} \quad (b)$$

$$\begin{vmatrix} -\frac{3}{4} & 0 & \frac{3}{4} \\ 0 & 0 & 0 \\ \frac{3}{4} & 0 & -\frac{3}{4} \end{vmatrix} \quad (c)$$

$$\begin{vmatrix} \frac{1}{2} & 0 & -\frac{1}{2} \\ \frac{1}{2} & 0 & -\frac{1}{2} \\ \frac{1}{2} & 0 & -\frac{1}{2} \end{vmatrix} \quad (d)$$

$$\begin{vmatrix} \frac{1}{2} & \frac{1}{2} & \frac{1}{2} \\ 0 & 0 & 0 \\ -\frac{1}{2} & -\frac{1}{2} & -\frac{1}{2} \end{vmatrix} \quad (e)$$

8. Vorrichtung gemäß einem der Ansprüche 4 bis 8 mit einer Peak- bzw. Spitzendetektoreinrichtung (203); mit einem Sub-Bildelementstellungsprozessor (208), der die parallele Anordnung von Ortsfrequenzfiltern bzw. Raumfiltern aufweist; mit Scanlinien-Verzögerungsmitteln (204, 205), die drei Scanlinien bzw. -zeilen parallel zu der Peak- bzw. Spitzendetektoreinrichtung und dem Sub-Bildelementprozessor zur Verfügung stellt; und mit Mitteln (206, 207, 209) zum integralen bzw. gemeinsamen Bestimmen von x- und y-Werten, die einem Peak bzw. einer Spitze entsprechen, die in der Peak- bzw. Spitzendetektoreinrichtung erfaßt worden ist und die die Werte mit x- und y-Verstellungs- bzw. -Verschiebungswerten in eine Beziehung setzen oder kombinieren, die durch den Sub-Bildelement-Stellungsprozessor zur Verfügung gestellt sind, um eine Sub-Abtastintervall-Genauigkeit bzw. Unterabtastintervall-Genauigkeit der x- und y-Werte zur verfügung zu stellen, die einem Peak bzw. einer Spitze entsprechen.

**Revendications**

1. Méthode de localisation, avec une précision d'intervalle inférieur à un échantillon, d'une valeur fixe dans une surface de corrélation échantillonnée S(x,y), qui comprend l'étape de localisation d'un point échantillon x,y adjacent à une valeur fixe,
caractérisée par les étapes de :

développement autour de x,y d'une fonction quadratique Z(x,y) telle que

$$Z(x,y) = ax^2 + by^2 + cxy + dx + ey + f;$$

détermination des coefficients linéaires de Z(x,y) qui représentent une erreur minimisée entre S(x,y) et Z(x,y) ; et calcul des coordonnées x et y de la valeur fixe, à partir des dits coefficients linéaires.

2. Méthode suivant la revendication 1, dans laquelle les coefficients linéaires de Z(x,y) qui représentent une erreur minimisée entre S(x,y) et Z(x,y) sont déterminés conformément à :

$$c = (M^T M)^{-1} M^T s$$

où

$$c = \begin{bmatrix} a \\ b \\ c \\ d \\ e \\ f \end{bmatrix}, \quad s = \begin{bmatrix} s(-1,-1) \\ s(0,-1) \\ s(1,-1) \\ s(-1,0) \\ s(0,0) \\ s(1,0) \\ s(-1,1) \\ s(0,1) \\ s(1,1) \end{bmatrix}, \quad M = \begin{bmatrix} 1 & 1 & 1 & -1 & -1 & 1 \\ 0 & 1 & 0 & 0 & -1 & 1 \\ 1 & 1 & -1 & 1 & -1 & 1 \\ 1 & 0 & 0 & -1 & 0 & 1 \\ 0 & 0 & 0 & 0 & 0 & 1 \\ 1 & 0 & 0 & 1 & 0 & 1 \\ 1 & 1 & -1 & -1 & 1 & 1 \\ 0 & 0 & 0 & 0 & 1 & 1 \\ 1 & 1 & 1 & 1 & 1 & 1 \end{bmatrix}$$

3. Méthode suivant la revendication 1 ou la revendication 2, dans laquelle les coordonnées x et y de la valeur fixe sont calculées conformément à

$$x = \frac{ce - 2bd}{4ab - c^2} \ \& \ y = \frac{ed - 2ae}{4ab - c^2}$$

**4.** Appareil pour la localisation, avec une précision d'intervalle inférieur à un échantillon, d'une valeur fixe dans une surface de corrélation échantillonnée S(x,y), qui comprend des moyens de génération d'un signal d'échantillon par balayage de trame à partir de la surface de corrélation ; un ensemble parallèle de filtres spatiaux (100-105) recevant chacun ledit signal d'échantillon ; et des moyens arithmétiques (120) recevant les sorties desdits filtres et fournissant les coordonnées d'une valeur fixe considérée, avec une précision d'intervalle inférieur à un échantillon, à partir des coefficients linéaires de $Z(x,y)=ax^2+by^2+cxy+dx+ey+f$ qui représentent une erreur minimisée entre S(x,y) et Z(x,y).

**5.** Appareil suivant la revendication 4, dans lequel ledit ensemble parallèle de filtres spatiaux comprend cinq filtres (100-105) qui correspondent respectivement aux coefficients linéaires a,b,c,d et e.

**6.** Appareil suivant la revendication 5, dans lequel chaque dit filtre a une ouverture de trois lignes de balayage et de trois échantillons.

**7.** Appareil suivant la revendication 6, dans lequel les ouvertures des filtres respectifs sont les suivantes :

$$\begin{vmatrix} \frac{1}{2} & -1 & \frac{1}{2} \\ \frac{1}{2} & -1 & \frac{1}{2} \\ \frac{1}{2} & -1 & \frac{1}{2} \end{vmatrix} \text{(a)}$$

$$\begin{vmatrix} \frac{1}{2} & \frac{1}{2} & \frac{1}{2} \\ -1 & -1 & -1 \\ \frac{1}{2} & \frac{1}{2} & \frac{1}{2} \end{vmatrix} \text{(b)}$$

$$\begin{vmatrix} -\frac{3}{4} & 0 & \frac{3}{4} \\ 0 & 0 & 0 \\ \frac{3}{4} & 0 & -\frac{3}{4} \end{vmatrix} \text{(c)}$$

$$\begin{vmatrix} \frac{1}{2} & 0 & -\frac{1}{2} \\ \frac{1}{2} & 0 & -\frac{1}{2} \\ \frac{1}{2} & 0 & -\frac{1}{2} \end{vmatrix} \text{(d)}$$

$$\begin{vmatrix} \frac{1}{2} & \frac{1}{2} & \frac{1}{2} \\ 0 & 0 & 0 \\ -\frac{1}{2} & -\frac{1}{2} & -\frac{1}{2} \end{vmatrix} \text{(e)}$$

**8.** Appareil suivant une quelconque des revendications 4 à 8, comprenant des moyens de détection de pic (203) ; un processeur de position de sous-pixel (208) incluant ledit ensemble parallèle de filtres spatiaux ; des moyens de retard de ligne de balayage (204,205) fournissant trois lignes de balayage en parallèle auxdits moyens de détection de pic et audit processeur de sous-pixel ; et des moyens (206,207,209) pour déterminer des valeurs entières x et y correspondant à un pic détecté dans lesdits moyens de détection de pic, et pour combiner lesdites valeurs avec des valeurs de décalage de x et y fournies par ledit processeur de position de sous-pixel, afin d'obtenir, avec une précision d'intervalle inférieur à un échantillon, les valeurs x et y correspondant à un pic.

Fig.1

Fig.2

Fig.3